# EUROPÄISCHE PATENTSCHRIFT

(11) **EP 0 559 673 B1**
(45) Veröffentlichungstag und Bekanntmachung des Hinweises auf die Patenterteilung: **14.12.1994**
(21) Anmeldenummer: 91919912.5
(22) Anmeldetag: 11.11.1991
(51) Int. Cl.: B62D 55/088, B62D 55/092

(54) **DICHTUNGSANORDNUNG AN SCHARNIERGELENKEN VON GLEISKETTEN**
SEALING ARRANGEMENT FOR HINGES OF CRAWLER CHAINS
GARNITURE D'ETANCHEITE POUR ARTICULATIONS DE CHENILLES

(30) Priorität: 07.12.1990 DE 4039095
(43) Veröffentlichungstag der Anmeldung: 15.09.1993
(73) Patentinhaber: INTERTRACTOR AKTIENGESELLSCHAFT, D-58273 Gevelsberg (DE)
(72) Erfinder: KETTING, Michael, D-5828 Ennepetal (DE)
(74) Vertreter: Köchling, Conrad-Joachim
(86) Internationale Anmeldenummer: DE9100883
(87) Internationale Veröffentlichungsnummer: WO9210389

(56) Entgegenhaltungen:
- DE-A- 1 505 860
- US-A- 3 409 336

## Beschreibung

Die Erfindung betrifft eine Dichtungsanordnung an Scharniergelenken von Gleisketten, wobei das Gelenk aus einem Bolzen und einer Buchse besteht, an dem Bolzen die äußeren Kettenglieder und an der Buchse die inneren Kettenglieder befestigt sind, wobei der Bolzen ein befüllbares Schmiermittelreservoir aufweist, welches insbesondere über einen Querkanal mit dem Schmierspalt zwischen Buchse und Bolzen, in Verbindung steht, der an seinen Enden durch Dichtungen abgedichtet ist, die sich an den äußeren Kettengliedern einerseits und an den Buchsenenden andererseits dichtend abstützen, wobei zwischen Buchsenende und äußerem Kettenglied jeweils ein formstabiles Stützelement angeordnet ist.

Aus der DE-A-31 27 104 ist beispielsweise eine derartige Dichtungsanordnung bekannt. Bei der bekannten Dichtungsanordnung ist zwischen den Buchsenenden in einer entsprechenden Aufnahmehöhlung der äußeren Gliedteile auf dem Bolzen mit Spiel ein Stützring angeordnet, auf dessen Außenseite wiederum die eigentliche elastische Dichtung sitzt. Die Dichtung stützt sich mit ihren Dichtelementen oder Schenkeln einerseits an Teilen des äußeren Kettenglieders und andererseits an der Buchsenstirnseite ab. Bei hochbelasteteten Ketten von Gleiskettenfahrzeugen und dergleichen ist es erforderlich, die Gelenke zu schmieren, was gemäß Stand der Technik durch Schmiermittelbefüllung einer Buchsen-/Bolzenkombination erfolgt, wobei durch die Anordnung eines Stützring-Dichtung-Verbundes zwischen Buchse, Bolzen und Kettenglied ein Schmierraum im Gelenkbereich entsteht. Der Nachteil der bisher bekannten Lösungen besteht darin, daß die in den Gelenken auftretenden Vertikal- und Horizontalkräfte zwischen Buchse-Stutzring-Kettenglied, Buchse-Stützring-Bolzen oder auch zwischen Kettenglied-Stützring-Bolzen Verspannungen erzeugen, die nachteilige Auswirkungen auf die Abdichtung des Gelenkes haben können. Es kann beispielsweise zu Stützringbruch oder zu hoher Abnützung des Dichtungsmaterials kommen.

Im Stand der Technik sind sowohl die vorbeschriebenen Dichtungsanordnungen bekannt, wobei als Schmiermittel fließfähige Schmiermittel eingesetzt werden, als auch Dichtungsanordnungen, bei denen das Schmiermittelreservoir durch die Kammer gebildet ist, in welcher die Dichtung angeordnet ist. Dabei wird als Schmiermittel Fett oder dergleichen wenig fließfähiges Material eingesetzt. Auch bei dieser bekannten Ausbildung ist der Schmierspalt zwischen Buchse und Bolzen mit Fett gefüllt und ebenso die Kammer, in der die Dichtung angeordnet, und zwar in dem dem Schmierspalt zugewandten Bereich. Bei solchen Ausbildungen entfällt das Schmiermittelreservoir im Bolzen selbst, so daß der Bolzen als Massivteil ohne Höhlung ausgebildet sein kann.

Aufgabe der Erfindung ist es hiervon ausgehend, eine Dichtungsanordnung gattungsgemäßer Art zu schaffen, bei der die im Gelenk auftretenden Kräfte im wesentlichen nur auf einen Verbund zwischen Buchse und Kettenglied beschränkt sind.

Weiterhin ist es Aufgabe der Erfindung, ein gattungsgemäßes Scharniergelenk zu schaffen, welches bei gleichen Fertigungselementen die Komplettierung zu einer ungeschmierten, dichtungslosen Anordnung oder zu einer geschmierten, mit Dichtungsanordnung versehenen Gleiskette ermöglicht.

Zur Lösung dieser Aufgabe schlägt die Erfindung vor, daß das Stützelement einstückig an die Buchsenenden angeformt ist und der Schmierspalt mit dem die Dichtungen aufnehmenden Raum über Schmiernuten oder Schmierkanäle verbunden ist, die in der Stirnfläche der angeformten Stützelemente und/oder im Buchsenkörper ausgebildet sind, und/oder den Buchsenkörper durchgreifende Schmierlöcher oder -kanäle ausgebildet sind, mittels derer der Schmierspalt mit dem Dichtraum in Verbindung steht.

Durch diese Ausbildung ist es möglich, daß die Dichtung direkt zwischen Buchse und äußeren Kettenglied angeordnet ist, ohne daß ein zusätzlicher Stützring oder andere vergleichbare Elemente im Gelenkraum angeordnet sein müssen, die Reibschluß mit sich bringen könnten. Bei der konkreten Ausführung der Erfindung sind die Buchsen an ihren Enden so ausgebildet, daß beim Verpressen der äußeren Kettenglieder auf Bolzenmaß ein preßdruckabhängiger Kraftschluß zwischen Buchse und äußerem Kettenglied erreicht werden kann und sich zwischen dem äußeren Kettenglied und der Buchse ein Dichtraum ergibt, der durch eine entsprechend ausgebildete Dichtung die Abdichtung des Gelenkes in diesem Bereich gewährleistet. Die ausreichende Versorgung mit Schmiermittel wird alternativ oder in Kombination dadurch erreicht, daß an den Stirnseiten der Buchsenvorsprünge radiale Schmiernuten angeordnet und ausgebildet sind, oder aber den Buchsenkörper durchgreifende Schmierlöcher bzw. Kanäle ausgebildet sind, mittels derer der Schmierspalt mit dem Dichtraum in Verbindung steht.

Die Ausbildung der Dichtung selbst ist den räumlichen Gegebenheiten und geometrischen Verhältnissen anzupassen, wobei der Dichtungsraum zwischen Kettenglied und Buchse möglichst gut durch die Dichtung ausgenutzt werden kann. Durch entsprechende anzupassende Ausbildung der Dichtung kann an der Labyrinthanlagefläche des Kettengliedes sowie dem entsprechende Teilabschnitt der Buchsenanlagefläche eine vollkommene und dauerhafte Abdichtung gewährleistet werden. Als einfachste Lösung für die Dichtung kommt ein Rundring aus elastischem Material in Betracht, wobei andere Dichtungsformen und Kombinationen von Dichtungsmaterialien (Elastomerwerkstoffe) möglich sind.

Bevorzugt ist ferner vorgesehen, daß die Stirnfläche der angeformten Stützelemente rechtwinklig zur Buchsenachse gerichtet verlaufen.

Desweiteren ist bevorzugt, daß die zwischen der Stirnfläche der Stützelemente und dem Buchsenmantel befindliche Fläche der Buchse gegenüber der Stirnfläche zurückspringend ausgebildet ist, wobei der die Dichtungsaufnahmehöhlung bildende Bereich der äußeren Kettenglieder in axialer Richtung bis über den Beginn der zylindrischen Mantelfläche der Buchse reicht und die Buchse mindestens geringfügig von die Höhlung umfassenden Gliedteilen der äußeren Glieder mit radialem Spiel übergriffen ist.

Schließlich ist bevorzugt, daß der Rücksprung zwischen Stirnfläche und Buchsenmantel stufenlos ausgebildet ist.

Dabei kann die Übergangsfläche zwischen Stirnfläche und Buchsenmantel als Schrägfläche oder als konkav oder konvex gebildete gekrümmte Fläche ausgebildet sein.

Eine bevorzugte Anordnung wird darin gesehen, daß die Dichtungen an die deren Aufnahmeraum umgebenden Wandungen des äußeren Kettengliedes oder der Buchse anvulkanisiert sind, wobei die Dichtungen vollständig oder zumindest teilweise aus vulkanisierbarem Werkstoff bestehen.

Durch diese Ausbildung ist es möglich, die Dichtung vor der Montage der Einzelteile an die Wandung des äußeren Kettengliedes oder der Buchse anzuvulkanisieren, so daß ein fester Zusammenhalt vor der Montage gegeben ist und zusätzlich die Dichtung lediglich eine durch Relativbewegungen beanspruchte Fläche aufweist, nämlich die Fläche, die sich an dem jeweils anderen Bauteil abstützt. Vorzugsweise ist die Anordnung dabei so getroffen, daß die Dichtung an die den Aufnahmeraum umgebende Wandung des äußeren Kettengliedes anvulkanisiert ist.

Eine bevorzugte Weiterbildung wird noch darin gesehen, daß der die Dichtungsaufnahmehöhlung bildende Bereich des äußeren Kettengliedes sich in radialer Richtung nur so weit erstreckt, daß ein Bewegungsspiel (Spalt) zwischen dem von diesem übergriffenen zylinderischen Mantelflächenbereich der Buchse und dem übergreifenden Wandungsbereich des Kettengliedes verbleibt.

Bei der erfindungsgemäßen Ausbildung ist es möglich, identische Bauteile in identischer Abmessung einzusetzen, gleichgültig, ob aus diesen Bauteilen später eine geschmierte Kette mit Dichtungsanordnung oder eine ungeschmierte Kette ohne Dichtungsanordnung zusammengefügt werden soll. Grundsätzlich ermöglicht diese Anordnung es auch, bisher übliche Bauteile für ungeschmierte Ketten für geschmierte Ketten einzusetzen, wobei lediglich eine entsprechende Bearbeitung des Buchsenteiles an den Stirnflächen erfolgen muß, andere Bearbeitungsgänge aber überflüssig sind.

Ausführungsbeispiele der Erfindung sind in der Zeichnung dargestellt und im folgenden näher beschrieben.

Es zeigt:
- Fig. 1: Schematisch ein Scharniergelenk einer Gleiskette mit Dichtungsanordnung;
- Fig. 2 + 3: Varianten eines Ausschnittes der Gelenkverbindung im Schnitt gesehen.

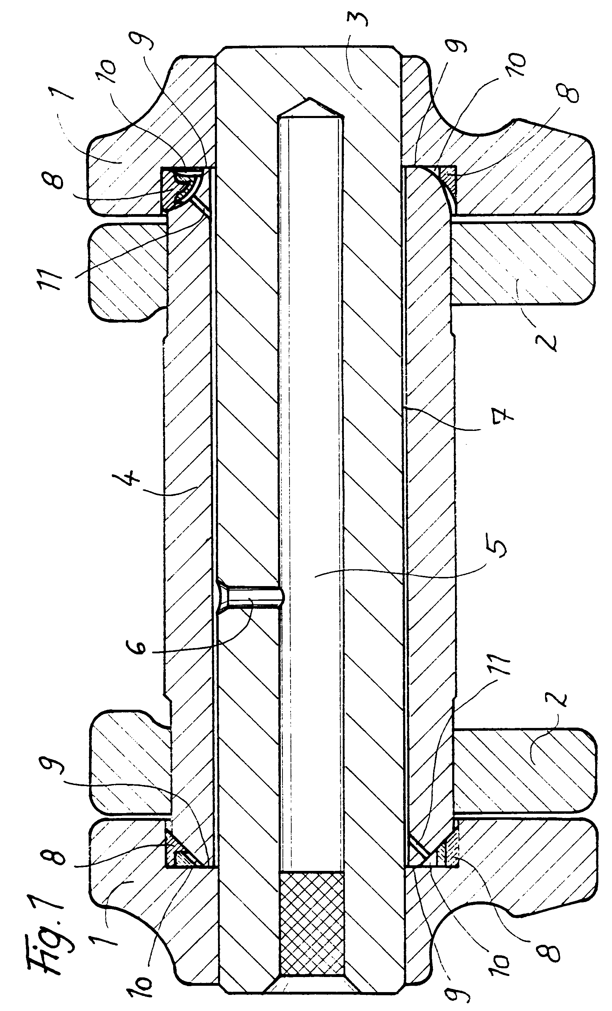

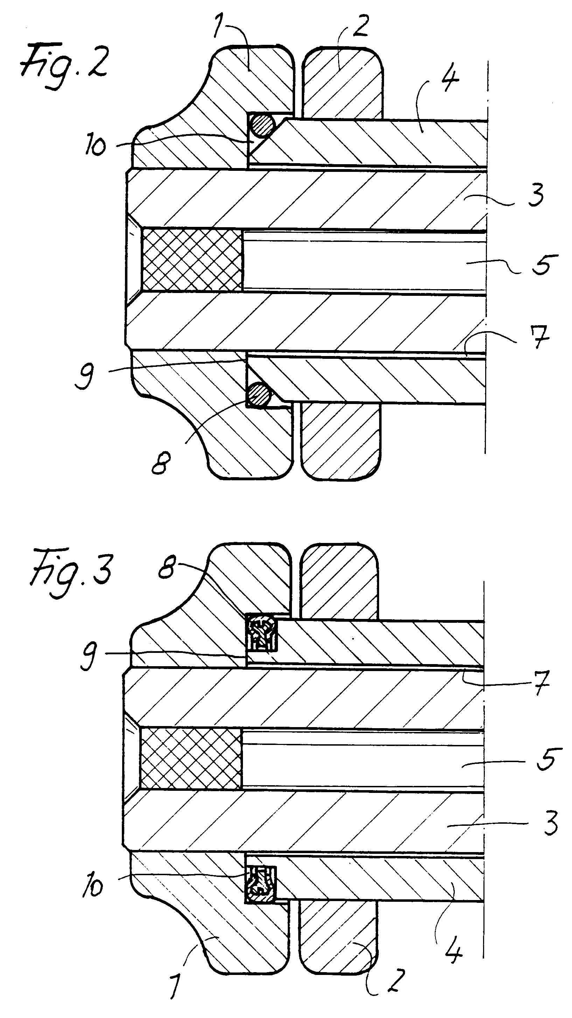

Das Scharniergelenk besteht gemäß Ausführungsbeispiel aus zwei äußeren Kettengliedern 1, zwei inneren Kettengliedern 2, einem Bolzen 3 und einer Buchse 4. Die äußeren Kettenglieder 1 sind mit dem Bolzen 3 beispielsweise in Form einer Schrumpfverbindung verbunden, während die inneren Kettenglieder 2 in entsprechender Weise mit der Buchse 4 verbunden sind. Der Bolzen 3 weist eine einseitig nach außen offene Bohrung 5 auf, die als Schmiermittelreservoir dient. Die Bohrung 5 ist über eine Querkanal 6 mit einem Spalt zwischen der Buchse 4 und dem Bolzen 3 verbunden, welcher Spalt wiederum in Verbindung mit Dichtungsanordnungen 8 steht, die in einer Höhlung der äußeren Kettenglieder 1 angeordnet sind. Die Dichtungen 8 verhindern den Schmiermittelaustritt nach außen. Zwischen dem Ende der Buchse 4 und dem äußeren Kettenglied 1 ist jeweils ein formstabiles Stützelement ausgebildet, welches einstückig an die Buchsenenden angeformt ist. Dabeiist der Schmierspalt 7 mit dem die Dichtung aufnehmenden Raum 10 über Schmiernuten oder Schmierkanäle 11 verbunden. Die Schmiernuten sind gegebenenfalls radial an der Stirnfläche des Stützelementes 9 ausgebildet, während die Schmierlöcher den Buchsenkörper durchgreifen und die Verbindung zwischen dem Schmierspalt 7 und der Höhlung 10 herstellen. Bei allen Ausführungsbeispielen ist die Stirnfläche der angeformten Stützelemente 9 rechtwinklig zur Buchsenachse gerichtet, also parallel zur rechtwinklig zur Buchsenachse gerichteten Fläche der Höhlung 10 des äußeren Kettengliedes 1. Ebenfalls bei allen Ausführungsbeispielen ist die zwischen der Stirnfläche der Stützelemente 9 und dem Buchsenmantel der Buchse 4 befindliche Fläche der Buchse gegenüber der Stirnfläche der Stützelemente 9 zurückspringend ausgebildet, wobei der die Dichtungsaufnahmehöhlung 10 bildende Bereich der äußeren Kettenglieder 1 in axialer Richtung bis über den Beginn der Mantelfläche der Buchse 4 reicht, wobei die Buchse mindestens geringfügig von die Höhlung 10 umfassenden Gliedteilen der äußeren Glieder 1 mit radialem Spiel übergriffen ist. Es wird somit kein radialer Zugangsspalt zu den Höhlungen 10 und damit zu den Dichtungen 8 gebildet, so daß das Eindringen von Schmutz oder dergleichen in die Höhlung 10 erschwert oder weitestgehend verhindert ist.
Während bei dem Ausführungsbeispiel gemäß Figur 3 der Rücksprung zwischen der Stirnfläche des Stützelementes 9 und dem Buchsenmantel der Buchse 4 in Form einer Stufe ausgebildet ist, ist bei den anderen Ausführungsbeispielen der Rücksprung stufenlos, nämlich in Figur 2 sowie in Figur 1 links gezeigt durch eine Schrägfläche, in Figur 1 rechts oben durch eine konkave Fläche und in Figur 1 unten rechts durch eine konvexe Fläche. Je nach Form und Ausbildung der Dichtung ist die Flächenausbildung beliebig, jedoch der Dichtung anzupassen. Auch die Form der Dichtungen 8 ist beliebig, ebenso wie die Möglichkeit, die Dichtungen aus einem einheitlichen Elastomermaterial oder aus elastomeren Komponentenwerkstoffen zu fertigen.

Die Dichtungen 8 sind vorzugsweise an die ihren Aufnahmeraum 10 umgebenden Wandungen des äußeren Kettengliedes 1 anvulkanisiert, wobei die Dichtungen vollständig oder zumindest teilweise aus vulkanisierbarem Werkstoff bestehen. Aus der erfindungsgemäßen Dichtungsanordnung ergibt sich die Möglichkeit der Verwendung bisher üblicher Bauteile, die zur Herstellung von ungeschmierten Ketten verwendet wurden. Bei dieser Anordnung erstreckt sich der die Dichtungsaufnahmehöhlung 10 bildende Bereich des äußeren Kettengliedes 1 in radialer Richtung nur so weit, daß ein Bewegungsspiel (Spalt) zwischen dem von diesem übergriffenen zylindrischen Mantelflächenbereich der Buchse 4 und dem übergreifenden Wandungsbereich des Kettengliedes 1 verbleibt.

## Patentansprüche

1. Dichtungsanordnung an Scharniergelenken von Gleisketten, wobei das Gelenk aus einem Bolzen (3) und einer Buchse (4) besteht, an dem Bolzen die äußeren Kettenglieder (1) und an der Buchse die inneren Kettenglieder (2) befestigt sind, wobei der Bolzen ein befüllbares Schmiermittelreservoir (5) aufweist, welches insbesondere über einen Querkanal (6) mit dem Schmierspalt zwischen Buchse und Bolzen in Verbindung steht, der an seinen Enden durch Dichtungen (8) abgedichtet ist, die sich an den äußeren Kettengliedern einerseits und an den Buchsenenden andererseits dichtend abstützen, wobei zwischen Buchsenende und äußerem Kettenglied jeweils ein formstabiles Stützelement (9) angeordnet ist, **dadurch gekennzeichnet, daß** das Stützelement (9) einstückig an die Buchsenenden angeformt ist und der Schmierspalt (7) mit dem die Dichtungen (8) aufnehmenden Raum (10) über Schmiernuten oder Schmierkanäle verbunden ist, die in der Stirnfläche der angeformten Stützelemente (9) und/oder Buchsen körper ausgebildet sind, und/oder den Buchsenkörper durchgreifende Schmierlöcher oder -kanäle ausgebildet sind, mittels derer der Schmierspalt (7) mit dem Dichtraum (10) in Verbindung steht.

2. Dichtungsanordnung nach Anspruch 1, **dadurch gekennzeichnet, daß** die Stirnfläche der angeformten Stützelemente (9) rechtwinklig zur Buchsenachse gerichtet verlaufen.

3. Dichtungsanordnung nach Anspruch 1 oder 2**, dadurch gekennzeichnet, daß** die zwischen der Stirnfläche der Stützfläche der Stützelemente (9) und dem Buchsenmantel befindliche Fläche der Buchse (4) gegenüber der Stirnfläche zurückspringend ausgebildet ist, wobei der die Dichtungsaufnahmehöhlung (10) bildende Bereich der äußeren Kettenglieder (1) in axialer Richtung bis über den Beginn der zylindrischen Mantelfläche der Buchse (4) reicht und die Buchse (4) mindestens geringfügig von die Höhlung (10) umfassenden Gliedteilen der äußeren Glieder (1) mit radialem Spiel übergriffen ist.

4. Dichtungsanordnung nach Anspruch 3, **dadurch gekennzeichnet, daß** der Rücksprung zwischen Stirnfläche und Buchsenmantel stufenlos ausgebildet ist.

5. Dichtungsanordnung nach einem der Ansprüche 1 bis 4, **dadurch gekennzeichnet,** daß die Dichtungen (8) an die deren Aufnahmeraum umgebenden Wandungen des äußeren Kettengliedes (1) oder der Buchse (4) anvulkanisiert sind, wobei die Dichtungen (8) vollständig oder zumindest teilweise aus vulkanisierbarem Werkstoff bestehen.

6. Dichtungsanordnung nach einem der Ansprüche 1 bis 5, **dadurch gekennzeichnet,** daß der die Dichtungsaufnahmehöhlung (10) bildende Bereich des äußeren Kettengliedes (1) sich in radialer Richtung nur so weit erstreckt, daß ein Bewegungsspiel (Spalt) zwischen dem von diesem übergriffenen zylindrischen Mantelflächenbereich der Buchse (4) und dem übergreifenden Wandungsbereich des Kettengliedes (1) verbleibt.

## Claims

1. A sealing arrangement for hinges of crawler chains, wherein the hinge consists of a pin (3) and a bushing (4), the outer chain links (1) are attached to the pin and the inner chain links (2) are attached to the bushing, the pin having a fillable lubricant reservoir (5), which is in communication in particular via a transverse channel (6) with the lubricating aperture between bushing and pin, which is sealed at its ends by seals (8), which are supported in sealed manner by the outer chain links on the one hand and by the bushing ends on the other hand, with a dimensionally stable support member (9) being disposed between respective bushing end and outer chain link, **characterised in that** the support member (9) is formed in one piece on the bushing ends and the lubricating aperture (7) is connected to the cavity (10) housing the seals (8) via oil grooves or oil channels, which are constructed in the end face of the formed support members (9) and/or bushings, and/or oil holes or channels passing through the bushing body are constructed, by means of which the lubricating aperture (7) is in communication with the seal cavity (10).

2. A sealing arrangement according to Claim 1, **characterised in that** the end face of the formed support members (9) extend directed at right angles to the bushing axis.

3. A sealing arrangement according to Claim 1 or 2, **characterised in that** the face of the bushing (4) located between the end face of the support face of support members (9) and the bushing shell is constructed so that it stands back from the end face, the region of the outer chain links (1) forming the seal cavity (10) extending in the axial direction over the beginning of the cylindrical shell face of the bushing (4) and the bushing (4) being overlapped with radial clearance at least slightly by the parts of the outer links (1) surrounding the cavity (10).

4. A sealing arrangement according to Claim 3, **characterised in that** the set-back part between the end face and the bushing shell has a step-less construction.

5. A sealing arrangement according to one of Claims 1 to 4, **characterised in that** the seals (8) are vulcanised to the wall of the outer chain link (1) surrounding their cavity or the wall of the bushing (4), the seals (8) being completely or at least partially made from vulcanisable material.

6. A sealing arrangement according to one of Claims 1 to 5, **characterised in that** the region of the outer chain link (1) forming the seal cavity (10) only extends in the radial direction by such a distance that a movement clearance (gap) remains between the cylindrical shell face region of the bushing (4) overlapped thereby and the overlapping wall region of the chain link (1).

## Revendications

1. Garniture d'étanchéité pour articulations de chenilles, l'articulation comprenant un axe et un manchon, les patins extérieurs étant fixés à l'axe et les patins intérieurs étant fixés au manchon, l'axe comportant un réservoir remplissable à lubrifiant communiquant, notamment par l'intermédiaire d'un canal transversal, avec l'interstice de lubrification qui est situé entre le manchon et l'axe et est rendu étanche, à ses extrémités, par l'intermédiaire d'organes d'étanchement prenant appui de manière étanche, d'une part, contre les patins extérieurs et, d'autre part, contre les extrémités du manchon, un élément d'appui à stabilité de forme étant respectivement interposé entre une extrémité du manchon et un patin extérieur, caractérisée par le fait que l'élément d'appui (9) est ménagé d'une seule pièce avec les extrémités du manchon et l'interstice de lubrification (7) communique, avec l'espace (10) recevant les organes d' étanchement (8), par l'intermédiaire de gorges de lubrification ou de canaux de lubrification pratiqué(e)s dans la face extrême des éléments d'appui (9) ménagés d'une seule pièce et/ou dans le corps du manchon ; et/ou le corps du manchon est traversé par des trous ou des canaux de lubrification, au moyen desquels l'interstice de lubrification (7) est en communication avec l'espace d'étanchement (10).

2. Garniture d'étanchéité selon la revendication 1, caractérisée par le fait que la face extrême des éléments d'appui (9) ménagés d'une seule pièce s'étend avec orientation à angle droit par rapport à l'axe du manchon.

3. Garniture d'étanchéité selon la revendication 1 ou 2, caractérisée par le fait que la surface du manchon (4), située entre la face extrême de la surface d'appui des éléments d'appui (9) et l'enveloppe dudit manchon, est réalisée en retrait par rapport à ladite face extrême ; garniture dans laquelle la région des patins extérieurs (1) qui forme la cavité (10) de réception des organes d'étanchement s'étend, dans le sens axial, jusqu'au-dessus de la naissance de la surface de l'enveloppe cylindrique du manchon (4), et ledit manchon (4) est au moins légèrement coiffé, avec jeu radial, par des parties des patins extérieurs (1) qui entourent la cavité (10).

4. Garniture d'étanchéité selon la revendication 3, caractérisée par le fait que le retrait, entre la face extrême et l'enveloppe du manchon, est réalisé exempt de décrochement.

5. Garniture d'étanchéité selon l'une des revendications 1 à 4, caractérisée par le fait que les organes d'étanchement (8) sont vulcanisés sur les parois du patin extérieur (1) ou du manchon (4), qui entourent le logement de ces organes, lesdits organes d'étanchement (8) consistant intégralement, ou au moins en partie, en un matériau vulcanisable.

6. Garniture d'étanchéité selon l'une des revendications 1 à 5, caractérisée par le fait que la région du patin extérieur (1) qui forme la cavité (10) de réception des organes d'étanchement s'étend, dans le sens radial, uniquement sur une distance propre à réserver un jeu (intervalle) autorisant un mouvement entre la zone de la surface de l'enveloppe cylindrique du manchon (4), coiffée par ledit patin, et la zone de paroi débordante dudit patin (1).
